(19) Europäisches Patentamt
European Patent Office
Office européen des brevets

(11) **EP 2 236 965 A2**

(12) **EUROPEAN PATENT APPLICATION**

(43) Date of publication:
**06.10.2010 Bulletin 2010/40**

(51) Int Cl.:
***F26B 3/02*** *(2006.01)*     ***F26B 13/10*** *(2006.01)*

(21) Application number: **10158387.0**

(22) Date of filing: **30.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **31.03.2009 JP 2009087845**

(71) Applicant: **Fujifilm Corporation**
**Minato-ku**
**Tokyo 106-8620 (JP)**

(72) Inventors:
• **Okano, Keio**
**Haibara-gun Shizuoka 421-0396 (JP)**
• **Taguchi, Takao**
**Haibara-gun 421-0396 (JP)**

(74) Representative: **Grünecker, Kinkeldey,**
**Stockmair & Schwanhäusser**
**Anwaltssozietät**
**Leopoldstrasse 4**
**80802 München (DE)**

(54) **Method of Drying Polymeric Film and Method of Producing Polymeric Water-Vapor Barrier Film**

(57) A method of drying polymeric film, the polymeric film being formed by applying on a support a coating solution containing a polymeric compound having water vapor barrier properties, at least one organic solvent and a compound having a hydrophilic functional group which has a water solubility of 0.3 to 7 g/100 mL at 25°C, the method including: a hot air drying step in which the polymeric film is dried to the dry point by hot air, and a steam drying step in which drying is performed with steam.

FIG.1

**Description**

BACKGROUND OF THE INVENTION

Field of the Invention

The present invention relates to a method of drying polymeric film and a method for producing a polymeric water-vapor barrier film. More particularly, it relates to a method of drying polymeric film which is capable of quickly removing the solvent from a polymeric film having water-vapor barrier properties, and a method of producing a polymeric water-vapor barrier film.

Background of The Invention

Chlorine resins, fluorine resins, their copolymers and other like resins are known to have excellent vapor barrier properties, and many of them have been utilized as agricultural films and food wrap films. Also, the films made from these resins excel in flexibility, strength, electrical insulation and flame retardancy and are widely used as coating binders, base films, parts of electric devices, building materials and such.

In the production of polymeric films, if impurities such as organic solvent are contained in the polymer used for making the film, it is required to quickly remove the unnecessary solvent for the sake of improvement or maintenance of productivity and quality of the product. Generally, in the production of polymeric films, drying of the produced films is conducted by a drying system using hot air, particularly hot air bearing solvent vapor. For instance, Japanese Patent No. 4092593 describes a process in which drying is conducted to the dry point in the first drying step, and then, in the second drying step, further drying is performed with hot air bearing vapor of a solvent which is lower in boiling point than the first solvent contained in the polymer to be dried.

Among such drying systems incorporating solvent vapor, a drying method using steam is particularly useful as this method, compared with the ordinary hot air drying system, is capable of quickly removing unnecessary solvent and is also highly rated in terms of safety.

SUMMARY OF THE INVENTION

The conventional drying system using steam, however, had the problem that, in the case of the polymeric films with high water vapor barrier properties made from chlorine resins, fluorine resins, their copolymers and other like resins, steam was unable to pass through the polymeric film because of its high water vapor barrier properties. Thus, as steam could not be brought enough inside the film, it was impossible to achieve sufficient drying of the film.

The present invention has been offered in view of these circumstances, and it is the object of the present invention to provide a method of drying polymeric film which is capable of performing quicker drying even for polymeric films with high water vapor barrier properties, and a method of producing a polymeric water-vapor barrier film.

In a first aspect of the present invention, in order to realize the above object, there is provided a method of drying polymeric film, the polymeric film being formed by applying on a support a coating solution containing a polymeric compound having water vapor barrier properties, at least one organic solvent and a compound having a hydrophilic functional group which has a water solubility of 0.3 to 7 g/100 mL at 25°C, the method comprising a hot air drying step in which the polymeric film is dried to the dry point by hot air, and a steam drying step in which drying is performed with steam.

According to the first aspect, as a compound having a hydrophilic functional group is added to the coating solution containing a polymeric compound having water vapor barrier properties, it is possible to let steam permeate inside the polymeric film even when drying is carried out with steam. Accordingly, this enables quick drying of the polymeric film inclusive of its inside, that is, a rise of drying speed.

In a second aspect of the present invention, the steam according to the first aspect is overheated steam having a temperature of 100°C or higher.

According to the second aspect, it is possible to conduct drying at high efficiency because of use of overheated steam having a temperature of 100°C or above.

In a third aspect of the present invention, the compound having a hydrophilic functional group according to the first or second aspect is added in 10 to 40 parts by mass per 100 parts by mass of the polymeric compound.

According to the third aspect, as it is possible to increase steam permeability of the polymeric film by defining the content of the compound having a hydrophilic functional group in the range shown above, drying can be accelerated. If the content of the compound having a hydrophilic functional group is below the above range, no noticeable effect of improving steam permeability of the polymeric film is derived. Also, no extra effect can be expected when the compound is contained in an amount in excess of the above range.

In a fourth aspect of the present invention, the polymeric compound according to any one of aspects 1 to 3 has a moisture permeability of 2.6 to 98 g (STP)cm/(cm$^2 \cdot$s$\cdot$cmHg).

According to the fourth aspect, by defining moisture permeability of the polymeric compound in the range shown above, particularly with addition of a compound having a hydrophilic functional group, it is possible to enhance the effect of steam drying and to accelerate drying.

In a fifth aspect of the present invention, for the method according to any one of aspects 1 to 4, the temperature of the steam is lower than the sublimation temperature of the compound having a hydrophilic functional group.

According to the fifth aspect, as the temperature of the steam is set lower than the sublimation temperature of the compound having a hydrophilic functional group, it is possible to perform drying without reducing steam permeability of the film by drying. Accordingly, this allows efficient steam drying.

In a sixth aspect of the present invention, the compound having a hydrophilic functional group according to any one of aspects 1 to 5 is at least one selected from adipic acid, fumaric acid, succinic acid, acetylsalicylic acid and benzoic acid.

The sixth aspect describes the compounds having a hydrophilic functional group that can be used favorably in the present invention. Use of the above-mentioned compounds having a hydrophilic functional group makes it possible to afford hydrophilicity to the polymeric films, to increase steam permeability, to enhance the effect of steam drying, and to accomplish quick drying.

In a seventh aspect of the present invention, the polymeric compound according to any one of aspects 1 to 6 is at least one compound selected from polystyrene, polyvinyl chloride, polyvinylidene chloride and polytetrafluoroethylene.

In the seventh aspect, there are cited the polymeric compounds that can be used especially favorably in the present invention. By use of these polymeric compounds, it is possible to significantly reduce steam permeability of the polymeric films when such a polymeric compound is used in combination with a compound having a hydrophilic functional group. This can provide a rise of drying speed.

In an eighth aspect of the present invention, the steam drying step according to any one of aspects 1 to 7 is carried out in a drying chamber and, with a steam atmosphere being created in the drying chamber, the support having a polymeric film formed thereon is passed through the drying chamber for drying.

According to the eighth aspect, drying can be performed efficiently as it is possible to start drying immediately after the support is carried into the drying chamber having a steam atmosphere formed in its inside.

In a ninth aspect of the present invention, the organic solvent according to any one of aspects 1 to 8 has a boiling point of 150°C or higher.

According to the drying method of the present invention, as it is possible to let steam permeate inside the polymeric film, drying can be performed efficiently even when using an organic solvent with a high boiling point. Therefore, drying can be performed effectively particularly when using an organic solvent such as mentioned above.

In a tenth aspect of the present invention, for the method according to any one of aspects 1 to 9, after the steam drying step, a heating step is incorporated wherein heating is carried out at a temperature not lower than the sublimation temperature of the compound having a hydrophilic functional group.

According to the tenth aspect, as heating is conducted at a temperature not lower than the sublimation temperature of the compound having a hydrophilic functional group after quick removal of the organic solvent in the polymeric film in the steam drying step, it is possible to sublimate the compound to recover the water vapor barrier properties to the polymeric film.

In an eleventh aspect of the present invention, in order to realize the above object, there is provided a method of producing a polymeric water-vapor barrier film, which comprises a polymeric film forming step in which a coating solution containing a polymeric compound having water vapor barrier properties, at least one organic solvent and a compound having a hydrophilic functional group which has a water solubility of 0.3 to 7 g/100 mL at 25°C, is coated on a support to form a polymeric film on the support, a hot air drying step in which the polymeric film is dried to the dry point by hot air, a steam drying step in which drying of the film is performed with steam, and a heating step in which heating is carried out at a temperature not lower than the sublimation temperature of the compound having a hydrophilic functional group.

According to the eleventh aspect, as a compound having a hydrophilic functional group is added to the coating solution containing a polymeric compound having water vapor barrier properties, it is possible to let steam penetrate inside the polymeric film even in steam drying, so that drying can be accomplished quickly throughout the polymeric film, including the inside thereof, making it possible to raise drying speed. Further, as heating is carried out at a temperature not lower than the sublimation temperature of the compound having a hydrophilic functional group after removal of the organic solvent, it is possible to sublimate the compound to newly provide water vapor barrier properties to the polymeric film.

According to the method of drying polymeric film and the method of producing a polymeric water-vapor barrier film of the present invention, it is possible to increase steam permeability of the polymeric films having water vapor barrier properties, so that steam is allowed to permeate inside the polymeric film. Therefore, drying can be accomplished quickly and efficiently by using the steam drying method.

BRIEF DESCRIPTION OF THE DRAWINGS

Fig. 1 is a block diagram schematically illustrating a polymeric film producing system; and
Fig. 2 is a block diagram schematically illustrating another embodiment of the polymeric film producing system.

DETAILED DESCRIPTION OF THE PREFERRED EMBODIMENTS

In the following, the preferred embodiments of the method of drying polymeric film according to the present invention are described. It is to be noted that in this specification the range of numerical values indicated by "A to B" (A and B being numerical values) means the range which includes the numeral values (A and B) before and after "to" as the lower limit numerical value and the upper limit numerical value, respectively.

[Coating Solution]

First, the coating solution that can be used in the present invention is described. The coating solution contains at least a polymeric compound having water vapor barrier properties, an organic solvent and a compound having a hydrophilic functional group which has a water solubility of 0.3 to 7 g/100 mL at 25°C.

<Polymeric compound>

The polymeric compounds usable in the present invention are not subject to any specific restrictions except for the requirement that these compounds should have water vapor barrier properties. Examples of such compounds include fluoric resins such as polychlorotrifluoroethylene, polytetrafluoroethylene, polyvinylidene fluoride and polyvinyl fluoride; chloric resins such as polyvinyl chloride and polyvinylidene chloride; high-density polyethylene, low-density polyethylene, polyethylene chloride, polystyrene, polypropylene, polychloroprene, polyisobutylene, natural rubber, chlorinated natural rubber, polyethylene terephthalate, copolymers of these compounds, copolymers of these compounds and polyacrylonitrile, copolymers of these compounds and polyvinyl acetate, and copolymers of these compounds and polystyrene.
Of these compounds, it is preferable to use chloric resins, fluoric resins, their copolymers and other like resins, particularly polyvinyl chloride, polyvinylidene chloride, polytetrafluoroethylene, polychlorotrifluoroethylene, polyvinyl fluoride and polyvinylidene fluoride.
These polymeric compounds preferably have a moisture permeability in the range of 2.6 to 98 g(STP)cm/ (cm$^2$·s·cmHg). Defining the moisture permeability of the polymeric compounds in the above range is particularly effective as it produces an effect of lowering water vapor barrier properties when a compound having a hydrophilic functional group is added. The more preferred range of moisture permeability of the polymeric compound is 2.6 to 48 g(STP)cm/ (cm$^2$·s·cmHg).

<Organic solvent>

An organic solvent is contained in the coating solution for dissolving the polymeric compound and the compound having a hydrophilic functional group which is described later. It is possible to use any type of organic solvent which is capable of dissolving the polymeric compound and the compound having a hydrophilic functional group. In the following reference, temperatures in the parentheses are boiling point.
Examples of the solvents having a low boiling point which are usable in the present invention include alcohols such as methanol (64.5°C-64.65°C), ethanol (78.32°C), n-propanol (97.15°C), isopropanol (82.3°C), n-butanol (117.7°C) and isobutanol (107.9°C); ethers such as ethyl ether (34.6°C) and isopropyl ether (68.27°C); ketones such as acetone (56.2°C), methyl ethyl ketone (79.59°C), methyl-n-propyl ketone (103.3°C), methyl isobutyl ketone (115.9°C) and diethyl ketone (102.2°C); esters such as methyl acetate (57.8°C), ethyl acetate (77.1°C), n-propyl acetate (101.6°C) and n-butyl acetate (126.5°C); hydrocarbons such as n-hexane (68.742°C) and cyclohexane (80.738°C); and water.
Examples of the solvents having a high boiling point may include γ-butyl lactone (204°C), acetamide (222°C), 1,3-dimethyl-2-imidazolidinone (225.5°C), N,N-dimethylformamide (153°C), tetramethyluric acid (175°C-177°C), nitrobenzene (211.3°C), formamide (210.5°C), N-methylpyrrolidone (202°C), N,N-dimethylacetamide (166°C), dimethyl sulfoxide (189°C) and the like.

According to the present invention, it is possible to conduct steam drying efficiently by reducing the water vapor barrier properties of the polymeric film, so that drying can be accomplished quickly and particularly suitably even when the film contains a solvent having a boiling point of 150°C or higher.

<Compound having hydrophilic functional group>

A compound having a hydrophilic functional group is added for improving steam permeability of the polymeric film to be formed. As it is possible to let steam permeate inside the polymeric film by such improvement of steam permeability of the polymeric film, it is possible to raise drying speed in the steam drying step.

Addition of a compound having a hydrophilic functional group can be expected to increase steam permeability of the polymeric film to be formed. However, high water solubility of the compound may adversely affect its compatibility with the polymeric compound, and drying of the film may cause precipitation of the compound having a hydrophilic functional group on the polymeric film, making it unable to derive the effect of improving steam permeability of the produced film. Therefore, the compound having a hydrophilic functional group needs to be one which is compatible with the polymeric compound used.

Specifically, the compound having a hydrophilic functional group is preferably one whose water solubility at 25°C is not higher than 7 g/100 mL, preferably falls in the range of 0.3 to 7 g/100 mL. By using a compound with water solubility in the above-defined range, it is possible to improve steam permeability of the polymeric film. If water solubility of this compound exceeds the above range, this compound may prove incompatible with the polymer, causing precipitation of the compound having a hydrophilic functional group as drying advances, making it unable to derive the desired effect. If water solubility of the compound having a hydrophilic functional group is below the above range, the compound proves too low in water solubility to produce the desired effect.

Examples of the hydrophilic functional groups of the compounds having hydrophilic functional groups may include carboxyl groups, carbonyl groups, ester groups, amide groups, hydroxyl groups, aldehyde groups, sulfo groups, amino groups, cyano groups, thiol groups, nitro groups and ether groups.

Specific examples of the compounds having a hydrophilic functional group may include fatty acids represented by the formula R-COOH (wherein R is H or a straight-chain fatty acid represented by the formula $CH_3(CH_2)_n$- (wherein $0 \leq n \leq 12$) or its isomer) such as formic acid, acetic acid and propionic acid; aromatic carboxylic acids such as benzoic acid, phthalic acid, isophthalic acid, terephthalic acid, hemimellitic acid, trimellitic acid, trimesic acid, mellophanic acid, prehnitic acid, pyromellitic acid, diphenic acid, acetylsalicylic acid and benzilic acid; difatty acids such as oxalic acid, malonic acid, succinic acid, glutaric acid, adipic acid, fumaric acid and phthalic acid; hydroxylic acids such as lactic acid, tartaric acid, hydroxybutyric acid and citric acid; amino acids such as alanine, glycine, phenylalanine and leucine; esters composed of two or more of these compounds or composed of these compounds and alcohols such as methanol, ethanol and propanol or phenols such as phenol and cresol; and substitutes of these compounds with a hydrocarbon group or a hydrophilic functional group such as mentioned above. Preferred among these compounds for use in the present invention are adipic acid, fumalic acid, succinic acid, acetylsalicylic acid and benzoic acid.

A compound having a hydrophilic functional group is contained in the coating solution preferably in an amount of 10 to 40 parts by mass, more preferably 10 to 20 parts by mass, per 100 parts by mass of the polymeric compound. No noticeable effect can be obtained if the content of this compound is less than the above-defined lower limit value. Also, no extra effect can be derived even if the compound is contained in an amount exceeding the upper limit value. By setting the content of the compound having a hydrophilic functional group in the above-defined range, it is possible to increase steam permeability of the polymeric film and to accelerate drying with steam.

<Other additives>

In forming the polymeric film, it is possible to add various additives, as required, in addition to the essential components described above. Other additives include surfactants for better coating, dyes, plasticizers for better film formation and hardening agents.

[Support]

The supports usable in the present invention are not limited to the continuously movable strip-shaped supports; it is also possible to use metals, resins, paper, cloth and the like having other shapes.

Aluminum is preferably used as the support employed in the production of the polymeric film. The aluminum sheet is made of a metal composed principally of aluminum which is dimensionally stable. Aluminum or an aluminum alloy is used therefor.

It is possible to use, beside the pure aluminum sheet, an alloy sheet mainly composed of aluminum but containing trace amounts of alien elements, and a plastic film or paper on which aluminum or an aluminum alloy has been laminated or deposited. It is also possible to use a composite sheet in which an aluminum sheet has been bonded on a polyethylene terephthalate film.

The aluminum sheet is not specifically defined in terms of composition, but it is most preferable to use a pure aluminum sheet. As it is difficult to obtain completely pure aluminum in view of its refining technology, there may be used an aluminum sheet containing a trace of an alien element or elements.

Thickness of the aluminum sheet is typically in the range of about 0.05 mm to about 1 mm, preferably 0.1 mm to 0.5 mm. Thickness of the sheet may be properly changed according to the size of the printer and printing plate as well as the user's requests.

<Polymeric film producing system>

A polymeric film producing system used for the method of drying polymeric film of the present invention is described below.

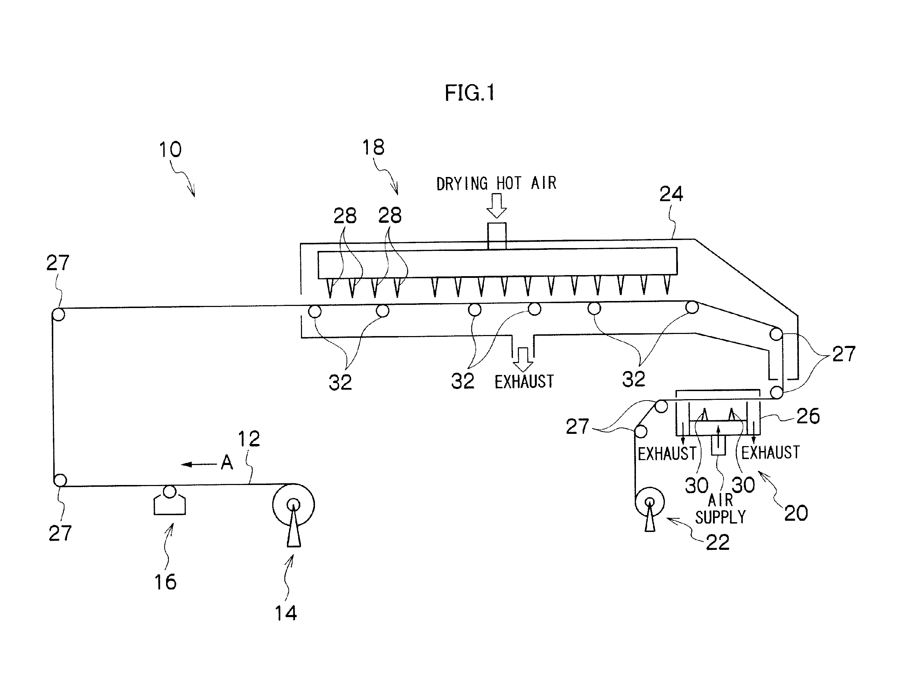

Fig. 1 is a block diagram illustrating schematically a polymeric film producing system 10. In Fig. 1, arrow A indicates the direction in which the support (which may hereinafter be referred to as "web") 12 is conveyed.

The polymeric film producing system 10 shown in Fig. 1 comprises principally a feeding device 14 which feeds the web 12, a coating device 16 which applies a coating solution to the web, a hot air drying apparatus 18 in which the coated polymeric film is dried by hot air, a steam drying apparatus 20 in which a steam atmosphere is formed for drying the film, and a take-up device 22 for rolling up the web 12. The polymeric film producing system 10 shown in Fig. 1 is an exemplification, and it may be substituted by other suitable systems.

The web 12 fed from the feeding device 14 is conveyed to pass through the respective steps under the guidance of guide rollers 27 and the like.

The coating device 16 is a device for applying a coating solution on the web 12 surface. There are available various coating methods such as, for instance, slide bead coating, curtain coating, bar coating, spin coating, spray coating, dip coating, air knife coating, blade coating and roll coating. The coating method used in this invention is not defined to any specific type, but slide bead coating, curtain coating and bar coating are preferably used. Bar coating is employed in the system of Fig. 1.

The hot air drying apparatus 18 and the steam drying apparatus 20 are the devices for drying the polymeric film formed on the web 12. Organic solvents are contained in the coating solutions, so it is imperative to quickly evaporate away such organic solvents from the viewpoints of improvement of productivity and product quality and its maintenance.

The hot air drying apparatus 18 is equipped with a hot air drying chamber 24 formed along the web conveying direction, with both ends of this device forming the slit-like openings for passing the web 12. The web 12 is conveyed by feed rollers 32 while supported at its underside. In the hot air drying chamber 24 are disposed a plurality of nozzles 28 for blowing hot air against the web 12. Thus the hot air drying apparatus 18 is designed to blow hot air against the web 12 to thereby dry it. The number of the nozzles 28 and their locations of installation can be properly selected, with Fig. 1 showing only an exemplification.

The hot air temperature is preferably set to fall within the range of 40 to 150°C. It is also preferable to set the average velocity of hot air at 8 m/S and the average air flow in the range of $1.9 \times 10^2$ to $11.9 \times 10^2$ m$^3$/min.

Drying by the hot air drying apparatus 18 is conducted till reaching the dry point at which the polymeric film is solidified. This is for the reason that drying cannot be accelerated and the desired effect of drying cannot be obtained when steam drying is carried out in a state where the polymeric film is not yet solidified. The "dry point" referred to in this specification means a point at which a state of drying is reached where there no longer takes place any change on the surface of the polymeric film on the web 12. It is possible to determine whether this drying point has been reached or not by, for instance, rubbing the surface of the polymeric film with a stick having a cloth coiled at an end and observing whether the coating solution adheres to the cloth attached to the stick end.

The dry point is described here more specifically. When the coated film is dried at a fixed air velocity and air temperature, the film surface temperature which remained at the wet-bulb temperature begins to rise up at a certain time point. The period before the film surface temperature begins to rise up is called efficient drying period, and during the period of wet-bulb temperature, there remains a state where intra-film movement of the volatiles in the film is sufficiently swift and there still amply exists the solution which is volatilized from the film surface.

The period after the rise of film surface temperature is called falling rate drying period. In this falling rate drying period, a state is produced where the volatiles in the coated film become short on the film surface and the drying speed remains low even if the same air is blown. The critical point between these efficient drying period and falling rate drying period is called drying changing point (dry point), and this is the point at which the solids ratio becomes 70 to 90%.

This solids ratio is given by the following equation:

$$\text{Solids ratio (\%)} = \text{solids content}/(\text{volatiles content} + \text{solids content}) \times 100$$

Solids content and (volatiles content + solids content) can be determined from measurements of weight.

Solids content and (volatiles content + solids content) can be determined from measurements of weight.

The polymeric film which has been dried to the dry point by the hot air drying apparatus 18 is then conveyed into a steam drying apparatus 20. This steam drying apparatus 20 is furnished with a steam drying chamber 26 in which a plurality of nozzles 30 for spouting steam to the web 12 are disposed. A steam atmosphere can be formed in the steam drying chamber 26 and heated to remove the organic solvent contained in the coating solution applied on the web 12.

Temperature of the steam atmosphere in the steam drying chamber 26 is preferably set lower than sublimation temperature of the compound having a hydrophilic functional group. Specifically, the steam atmosphere temperature is preferably set to remain in the range of 40 to 150°C. It is more preferable to use overheated steam of 100°C or higher. By conducting drying at a temperature lower then sublimation temperature of the compound having a hydrophilic functional group, it is possible to prevent the compound having a hydrophilic functional group from being sublimated in the steam drying step, making it possible to maintain steam permeability of the polymeric film and to accomplish steam drying at high efficiency.

Duration of the steam drying step is set at 0.5 seconds or longer for attaining the effect of the present invention. No specific upper limit is set on the duration of this step; a satisfactory effect can be obtained by conducting this step for 2 seconds.

In the operation of this steam drying step, it is preferable that the following formula (1) be satisfied:

$$0.2 \leq P/P_T < 1 \qquad \ldots (1)$$

wherein P is a partial pressure of steam (Pa), T is a temperature (°C) of the polymeric film in the steam drying step, and $P_T$ is a saturated steam pressure (Pa) at T°C.

When the above formula (1) is satisfied, it is possible to inhibit vapor of the organic solvent from being condensed on the web 12, allowing efficient drying away of the organic solvent.

The web 12 dried by the steam drying apparatus 20 is finally rolled up by the take-up device 22.

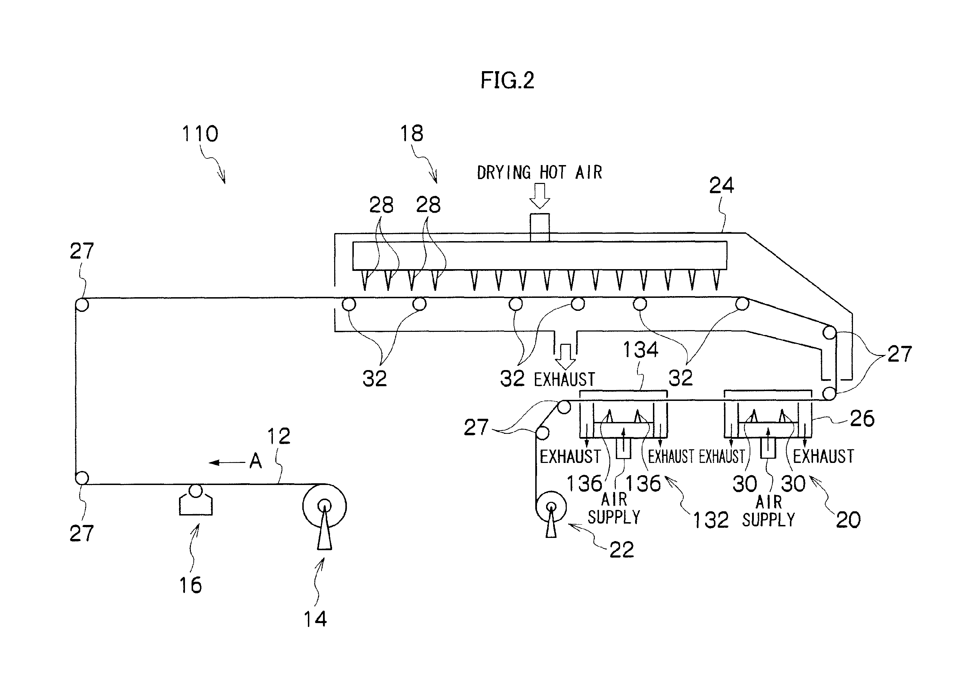

Fig. 2 is a block diagram illustrating schematically another embodiment of the polymeric film producing system. The polymeric film producing system 110 shown in Fig. 2 differs from the polymeric film producing system 10 of Fig. 1 in that a second steam drying apparatus 132 is provided next to the steam drying apparatus 20. In Fig. 2, the same parts and the parts having the same functions as in the system of Fig. 1 are given the same reference numerals, and the detailed explanation of these parts is omitted.

The second steam drying apparatus 132 is provided with a second steam drying chamber 134 in which a plurality of nozzles 136 for ejecting steam are disposed. This makes it possible to form a steam atmosphere in the second steam drying chamber 134 as in the steam drying apparatus 20.

Temperature of the steam atmosphere in the second steam drying chamber 134 is preferably set to be not lower than the sublimation temperature of the compound having a hydrophilic functional group. By conducting the drying operation at a temperature not lower than the sublimation temperature of the compound having a hydrophilic functional group, it is possible to remove this compound from the polymeric film and to form a film having water vapor barrier properties.

In this case, it is also preferable that the temperature of steam atmosphere in the steam drying chamber 26 be set to be not higher than the sublimation temperature of the compound having a hydrophilic functional group. By removing the organic solvent in the steam drying apparatus 20 and then removing the compound having a hydrophilic functional group in the second steam drying chamber 134, it is possible to perform highly efficient drying.

In Fig. 1, a step for heating by providing a second steam drying apparatus 132 was explained. As for the method of heating in this heating step, any appropriate method may be employed as far as it is capable of heating the steam atmosphere to or above the sublimation temperature of the compound having a hydrophilic functional group. For instance, a method comprising blowing of hot air or a method of heating by hot rolls may be used.

Examples

In the following, the present invention is described in further detail with reference to the examples thereof, but the present invention is not limited to the following examples. The polymeric film drying tests were conducted with the production system 10 of Fig. 1.

[Test Example 1]

Examples 1 to 5 and Comparative Examples 1 to 6

Drying of the polymeric films was carried out with or without steam drying and by changing the amount of the compound having a hydrophilic functional group contained in the coating solution for forming the polymeric films.
The polymeric films were formed by using the following materials. Coating solution:

Polyvinyl chloride/γ-butyrolactone(γ-BL)/methyl ethyl ketone; solids content = 5 mass%; coating rate = 30 cc/m$^2$; γ-butyrolactone and methyl ethyl ketone were mixed in a ratio by mass of 1:4; aluminum width to be coated = 150 mm.

Compound having a hydrophilic functional group:
Acetylsalicylic acid, used in an amount of 10 to 40% by mass based on the polymeric compound. Support: Aluminum (Al).
The coating solution was applied by bar coating. Drying was conducted at 120°C for hot air drying and at 120°C and a steam rate of 350 g/m$^3$ (31.5% Rh (relative humidity)) for steam drying.
For the tests, there were prepared as the coating solutions a sample in which acetylsalicylic acid was added as a compound having a hydrophilic functional group in a solvent solution containing polyvinyl chloride as a polymeric compound, and a sample in which acetylsalicylic acid was not added. Each coating solution was applied on an aluminum web by bar coating and then the coated web was subjected to hot air drying in the hot air drying zone and steam drying in the steam drying zone. Hot air drying was conducted until reaching the dry point at which the film was solidified, and after reaching the dry point, steam drying was carried out for 2 seconds. In Comparative Example 1, drying was conducted till reaching the dry point at which the film was solidified. In Examples 1 to 5 and Comparative Examples 3 to 6, in which a compound having a hydrophilic functional group was added, drying was carried out by conforming to Comparative Examples 1 and 2 in time of hot air drying. The tests involving steam drying were all conducted under normal pressure.

<Determination of residual γ-butyrolactone>

Each sample of polymeric film after drying was cut into 3 pieces, 10 mm in diameter, along with the aluminum web, and these pieces of sample were put into and sealed in a vial. This vial was placed in a head spacer (Tekmar 7000HT, GL Sciences Inc.) connected to a gas chromatograph (GC390B, GL Sciences Inc.). Heating of the vial in the head spacer was practiced at 180°C for 5 minutes. The gas chromatograph was operated using a packed column (Silicone DC-550, GL Sciences Inc.) at an oven temperature of 180°C and an FID temperature of 180°C. The residual solvent vapor volatilized in the vial was automatically supplied through the head spacer into the gas chromatograph, and the concentration of the solvent remaining in the polymeric film was calculated from the determined peak area and calibration curves of γ-butyrolactone.

Results are shown in Table 1.

[Table 1]

| | Hot air drying time [s] | Overheated steam drying time [s] | Amount of compound having hydrophilic functional group [mass%] | Amount of residual γ-BL [mg/m$^2$] |
|---|---|---|---|---|
| Comparative Example 1 | 52 | 0 | 0 | 170 |
| Comparative Example 2 | 50 | 2 | 0 | 175 |
| Comparative Example 3 | 52 | 0 | 10 | 160 |
| Example 1 | 50 | 2 | 10 | 110 |
| Comparative Example 4 | 52 | 0 | 20 | 155 |
| Example 2 | 50 | 2 | 20 | 69 |
| Comparative Example 5 | 52 | 0 | 30 | 142 |
| Example 4 | 50 | 2 | 30 | 58 |
| Comparative Example 6 | 52 | 0 | 40 | 136 |
| Example 5 | 50 | 2 | 40 | 57 |

As seen from Table 1, it was possible to remarkably improve the drying rate in steam drying by adding a compound having a hydrophilic functional group in a prescribed amount to a polymeric compound. In the Comparative Examples, although drying was stopped after about the same time of drying as in the Examples, it was necessary to prolong the hot air drying time for achieving the same degree of drying as possible in the Examples, which can confirm that according to the method of the present invention, it is possible to remarkably shorten the drying time in comparison with the conventional drying systems. As regards the amount incorporated of a compound having a hydrophilic functional group, drying scarcely advanced in steam drying in Comparative Examples 1 and 2 where no compound having a hydrophilic functional group was contained, whereas a reduction of the amount of residual γ-butyrolactone was seen in Example 1 where a compound having a hydrophilic functional group was added in an amount of 10% by mass. On the other hand, when the amount of this compound was 40% by mass, the produced effect was substantially the same as obtained when the amount of the compound added was 30% by mass, indicating an inception of saturation of effect at this point. It was thus confirmed that the amount of a compound having a hydrophilic functional group is preferably within the range of 10 to 40% by mass based on the polymeric compound.

[Test Example 2]

Examples 6 to 10 and Comparative Examples 7 to 13

Polymeric films were made by varying the compound having a hydrophilic functional group and drying of the films was carried out.

Drying was carried out in the same method as in Test Example 1 except that benzoic acid, acetylsalicylic acid, fumaric acid, adipic acid, succinic acid and malonic were used as the compounds having a hydrophilic functional group which differed in water solubility (rate of dissolution in 100 mL of water at 25°C), in an amount of 40% by mass based on the polymeric compound. Results are shown in Table 2.

[Table 2]

| | Hot air drying time [s] | Overheated steam drying time [s] | Compound having hydrophilic functional group | Amount of residual γ-BL [mg/m$^2$] | Water solubility at 25°C [g/100 mL] |
|---|---|---|---|---|---|
| Comparative Example 7 | 60 | 0 | Malonic acid | 157 | 7.3 |
| Comparative Example 8 | 58 | 2 | Malonic acid | 155 | 7.3 |
| Comparative Example 9 | 50 | 0 | Succinic acid | 191 | 7.0 |
| Example 6 | 48 | 2 | Succinic acid | 38 | 7.0 |
| Comparative Example 10 | 36 | 0 | Adipic acid | 180 | 1.4 |
| Example 7 | 34 | 2 | Adipic acid | 54 | 1.4 |
| Comparative Example 11 | 39 | 0 | Fumaric acid | 150 | 0.6 |
| Example 8 | 37 | 2 | Fumaric acid | 60 | 0.6 |
| Comparative Example 12 | 52 | 0 | Acetylsalicylic acid | 136 | 0.5 |
| Example 9 | 50 | 2 | Acetylsalicylic acid | 57 | 0.5 |
| Comparative Example 13 | 55 | 0 | Benzoic acid | 137 | 0.3 |
| Example 10 | 53 | 2 | Benzoic acid | 130 | 0.3 |

As seen from Table 2, it could be confirmed that the effect of steam drying is enhanced by using a compound having a hydrophilic functional group with high water solubility. However, in Example 10 where the compound used was highest in water solubility, the drying rate by steam drying was substantially equal to that by hot air drying. In Comparative Examples 7 and 8 where malonic acid was used as the compound having a hydrophilic functional group, malonic acid was incompatible with the polymer and precipitated, producing no noticeable effect of steam drying. These results demonstrate that water solubility of the additives is preferably in the range of 0.3 to 7 g/100 mL.

[Test Example 3]

Examples 11 to 14 and Comparative Example 14 to 25

Polymeric films were made by varying the polymeric compound in the coating solution and drying of the films was carried out.

The polymeric compound used in Test Example 1 was replaced by polystyrene, polyvinyl chloride, polyvinylidene chloride and polytetrafluoroethylene. The method of Test Example 1 was followed for the preparation of the coating solution with a solids content of 5% by mass, a coating rate of 30 cc/m$^2$ and a mixture of γ-butyrolactone : methyl ethyl ketone = 1 : 4 (in ratio by mass) as solvent. As for the other conditions, the same method as in Test Example 1 was also used for drying. Moisture permeability of the polymer was evaluated on four samples of each film by the cylinder plate method (JIS Z0208), and the mean value of measurements on four samples was shown here. Results are shown in Table 3.

[Table 3]

| | Hot air drying time [s] | Overheated steam drying time [s] | Polymeric compound | Amount of compound having hydrophilic functional group [mass%] | Amount of residual $\gamma$-BL [mg/m$^2$] | Moisture permeability of polymer [g (STP)·cm (cm$^2$·s·cmHg) $\times 10^{-2}$] |
|---|---|---|---|---|---|---|
| Comparative Example 14 | 35 | 0 | Polystyrene | 0 | 110 | 98 |
| Comparative Example 15 | 33 | 2 | Polystyrene | 0 | 85 | 98 |
| Comparative Example 16 | 35 | 0 | Polystyrene | 2 | 100 | 98 |
| Example 11 | 33 | 2 | Polystyrene | 2 | 68 | 98 |
| Comparative Example 17 | 52 | 0 | Polyvinyl chloride | 0 | 170 | 48 |
| Comparative Example 18 | 50 | 2 | Polyvinyl chloride | 0 | 175 | 48 |
| Comparative Example 19 | 52 | 0 | Polyvinyl chloride | 2 | 136 | 48 |
| Example 12 | 50 | 2 | Polyvinyl chloride | 2 | 57 | 48 |
| Comparative Example 20 | 55 | 0 | Polyvinylidene chloride | 0 | 190 | 3 |
| Comparative Example 21 | 53 | 2 | Polyvinylidene chloride | 0 | 190 | 3 |
| Comparative Example 22 | 55 | 0 | Polyvinylidene chloride | 2 | 170 | 3 |
| Example 13 | 53 | 2 | Polyvinylidene chloride | 2 | 91 | 3 |
| Comparative Example 23 | 60 | 0 | Polytetrafluoroethylene | 0 | 230 | 2.6 |
| Comparative Example 24 | 58 | 2 | Polytetrafluoroethylene | 0 | 229 | 2.6 |
| Comparative Example 25 | 60 | 0 | Polytetrafluoroethylene | 2 | 195 | 2.6 |
| Example 14 | 58 | 2 | Polytetrafluoroethylene | 2 | 126 | 2.6 |

For the polystyrene film having a moisture permeability of 98 g(STP)cm/(cm$^2$·s·cmHg) $\times 10^{12}$, it was possible to accelerate drying by conducting steam drying. Drying could be further accelerated by introducing additives.

In the case of the polymers having a moisture permeability of 48 g(STP)cm/(cm$^2$·s·cmHg) $\times 10^{12}$ or below, no significant effect was obtained by steam drying alone, but drying could be accelerated by adding a compound having a hydrophilic functional group. It was confirmed that the drying system of the present invention was particularly useful for the polymers having a moisture permeability of not less than 2.6 and not more than 48 g(STP)cm/(cm$^2$·s·cmHg) $\times 10^{12}$.

[Test Example 4]

Examples 15 and 16 and Comparative Examples 26 and 27

Using the polymeric film producing system 110 shown in Fig. 2, steam drying was carried out at a temperature not higher than the decomposition temperature of the compound having a hydrophilic functional group, and then second steam drying was conducted at a temperature not lower than the decomposition temperature of the compound having a hydrophilic functional group. Residual γ-butyrolactone and permeability of the produced polymeric film after drying were evaluated.

Acetylsalicylic acid was added in an amount of 40% by mass based on the polymeric compound. The same materials as employed in Example 1 were used for the coating solution and the support.

The coating solution was applied by bar coating. Drying was carried out at 120°C for hot air drying, at 120°C and a steam rate of 350 g/m$^3$ (31.5% Rh (relative humidity)) for initial steam drying, and at 140°C and 550 g/m$^3$ (28.3% Rh (relative humidity)) for second steam drying. In this drying operation, hot air drying was performed until reaching the dry point at which the film was solidified, and after reaching the dry point, drying was conducted at a steam temperature not higher than the decomposition temperature of the additive for a period shown in Table 4 below, after which drying was further performed at a steam temperature not lower than the decomposition temperature of the additive. Moisture permeability of the polymeric films after drying was evaluated on four samples of each film by the cylinder plate method (JIS Z0208), and the mean value of measurements on four samples was given here. Results are shown in Table 4.

[Table 4]

| | Hot air drying time [s] | Overheated steam drying time [s] 120°C | Second overheated steam drying time [s] 140°C | mount of compound having hydrophilic functional group [mass%] | Amount of residual γ-BL [mg/m$^2$] | Moisture permeability of polymeric films after drying [g(STP)·cm/ (cm$^2$·s·cmHg) $\times 10^{12}$] |
|---|---|---|---|---|---|---|
| Comparative Example 26 | 54 | 0 | 0 | 0 | 140 | 45 |
| Comparative Example 27 | 54 | 0 | 0 | 2 | 121 | 255 |
| Example 15 | 50 | 4 | 0 | 2 | 47 | 205 |
| Example 16 | 50 | 2 | 2 | 2 | 21 | 51 |

By adding the additive, it was possible to reduce the amount of residual γ-butyrolactone but permeability of the produced polymeric film increased as shown in Table 4. So, steam drying was performed after hot air drying, and then overheat drying was further conducted at a temperature higher than the decomposition and sublimation temperatures of the additive to let it sublimate, making it possible to form a film having water vapor barrier properties.

## Claims

1. A method of drying polymeric film, the polymeric film being formed by applying on a support a coating solution containing a polymeric compound having water vapor barrier properties, at least one organic solvent and a compound having a hydrophilic functional group which has a water solubility of 0.3 to 7 g/100 mL at 25°C, the method comprising:

   a hot air drying step in which the polymeric film is dried to the dry point by hot air; and
   a steam drying step in which drying is performed with steam.

2. The method according to claim 1, wherein the steam is overheated steam having a temperature of 100°C or higher.

3. The method according to claim 1 or 2, wherein the compound having a hydrophilic functional group in the coating solution is added in 10 to 40 parts by mass per 100 parts by mass of the polymeric compound.

4. The method according to any one of claims 1 to 3, wherein the polymeric compound has a moisture permeability of 2.6 to 98 g (STP)cm/(cm$^2$·s·cmHg),

5. The method according to any one of claims 1 to 4, wherein temperature of the steam is not higher than sublimation temperature of the compound having a hydrophilic functional group.

6. The method according to any one of claims 1 to 5, wherein the compound having a hydrophilic functional group is at least one selected from adipic acid, fumaric acid, succinic acid, acetylsalicylic acid and benzoic acid.

7. The method according to any one of claims 1 to 6, wherein the polymeric compound is at least one compound selected from polystyrene, polyvinyl chloride, polyvinylidene chloride and polytetrafluoroethylene.

8. The method according to any one of claims 1 to 7, wherein the steam drying step is carried out in a drying chamber (26) and, with a steam atmosphere being created in the drying chamber (26), the support having a polymeric film formed thereon is passed through the drying chamber for drying.

9. The method according to any one of claims 1 to 8, wherein the organic solvent has a boiling point of 150°C or higher.

10. The method according to any one of claims 1 to 9, wherein after the steam drying step, a heating step is incorporated wherein heating is carried out at a temperature not lower than the sublimation temperature of the compound having a hydrophilic functional group.

11. A method of producing a polymeric water-vapor barrier film, comprising:

a polymeric film forming step in which a coating solution containing a polymeric compound having water vapor barrier properties, at least one organic solvent and a compound having a hydrophilic functional group which has a water solubility of 0.3 to 7 g/100 mL at 25°C, is coated on a support to form a polymeric film on the support;
a hot air drying step in which the polymeric film is dried to the dry point by hot air;
a steam drying step in which drying of the film is performed with steam; and
a heating step in which heating is carried out at a temperature not lower than the sublimation temperature of the compound having a hydrophilic functional group.

FIG.1

FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 4092593 B